# EUROPÄISCHE PATENTSCHRIFT

(11) **EP 0 632 868 B1**
(45) Veröffentlichungstag und Bekanntmachung des Hinweises auf die Patenterteilung: **24.01.1996**
(21) Anmeldenummer: 93908847.2
(22) Anmeldetag: 20.03.1993
(51) Int. Cl.: F04C 15/02

(54) **FLÜGELZELLENPUMPE**
VANE-CELL PUMP
POMPE A CELLULES SEMI-ROTATIVE

(30) Priorität: 26.03.1992 DE 4209840
(43) Veröffentlichungstag der Anmeldung: 11.01.1995
(73) Patentinhaber: ZF FRIEDRICHSHAFEN Aktiengesellschaft, D-88038 Friedrichshafen (DE)
(72) Erfinder: DRASKOVITS, Günter, D-7070 Schwäbisch Gmünd (DE); MERZ, Johann, D-7070 Schwäbisch Gmünd (DE)
(86) Internationale Anmeldenummer: EP9300679
(87) Internationale Veröffentlichungsnummer: WO9319297

(56) Entgegenhaltungen:
- EP-A- 0 399 387
- DE-A- 3 005 656
- DE-A- 3 319 000
- DE-A- 4 110 734
- GB-A- 2 150 641

## Beschreibung

Die Erfindung betrifft eine Drehkolbenpumpe mit einem in einem Gehäuse sitzenden Kurvenring, in welchem sich ein auf einer Antriebswelle befestigter Rotor dreht. In dem Rotor sind radial bewegliche Arbeitsschieber geführt. Zwischen den Arbeitsschiebern gebildete Arbeitskammern sind axial durch Stirnplatten abgeschlossen. Für die Zu- und Abfuhr des Öls sind Saug- und Druckzonen vorgesehen. Im Bereich der Druckzonen befinden sich mehrere Auslaßöffnungen, die durch eine zungenartige Ventileinrichtung abgedeckt sind, so daß bei teilgefüllten Arbeitskammern ein Rückstrom bereits geförderten Öls verhindert wird. Die Arbeitsschieber sind auf ihrer radial innenliegenden Stirnseite vom Auslaßdruck beaufschlagt. Die Ölzufuhr in die Arbeitskammern ist durch Querschnittsverengungen begrenzt.

Eine Drehkolbenpumpe mit den angeführten Merkmalen, die nach dem Prinzip der Ansaugregelung arbeitet, ist bereits aus der DE 33 19 000 bekannt. In dieser Pumpe (Fig. 4, 12) sind in einen Rotor als Arbeitsschieber radial verschiebbare, federbelastete Gleitkörper eingebaut. In den sich verkleinernden Druckzonen gelangt das Öl in Räume unterhalb der Gleitelemente und wird von dort in Auslaßöffnungen verdrängt. Die Gleitkörper sind in einer derartigen Pumpe sehr breit ausgeführt, so daß sich ein verhältnismäßig kleines Fördervolumen ergibt. Durch die Umlenkung des Förderstromes unterhalb der Gleitelemente ergeben sich in der Pumpe zusätzliche Strömungswiderstände.

Weiterhin ist aus der EP 0 399 378 eine Flügelzellenpumpe bekannt, die nierenförmige Einlaßöffnungen aufweist. Diese Einlaßöffnungen sind bei einer üblichen doppelhubigen Pumpe, die ohne Saugregelung arbeitet, nur zweimal vorhanden. Der Rotor weist außerdem zwischen den Flügeln liegende Aussparungen auf, durch die eine Verbindung von den nierenförmigen Einlaßöffnungen zu den Arbeitskammern geschaffen wird. Da die Baumerkmale einer Saugregelung fehlen, gehört diese Pumpe zu einer anderen Gattung.

Der Erfindung liegt die Aufgabe zugrunde, eine möglichst verschleißarme, sauggeregelte Drehkolbenpumpe zu finden, die bei geringem Bauraum eine große Leistungsdichte aufweist. Des weiteren soll die Pumpe geringe innere Strömungswiderstände und einen leisen Lauf aufweisen.

Die Lösung dieser Aufgabe ist im Anspruch 1 enthalten. Der Anspruch 2 bezieht sich auf eine vorteilhafte Ausgestaltung.

Nach dem Hauptmerkmal ist die Drehkolbenpumpe als Flügelzellenpumpe ausgeführt, wobei der Rotor zwischen den Flügeln Steuerschlitze aufweist, die so bemessen sind, daß ein Rückströmen von gefördertem Öl aus einer Arbeitskammer höheren Druckes in eine Arbeitskammer niedrigeren Druckes vermieden wird. Dadurch, daß die Flügel sehr schmal sein können, hat die Pumpe bei geringen Abmessungen ein großes Fördervermögen.

Nach einem weiteren Merkmal hat ein Stützkörper für die Hubbegrenzung von beweglichen Zungen der Ventileinrichtung Öltaschen, aus denen das Öl bei der Öffnungsbewegung verdrängt werden muß. Diese Maßnahme dämpft das Öffnungsgeräusch der beweglichen zungen beim Anschlagen an den Stützkörper.

Zwei Ausführungsbeispiele der Erfindung sind anhand der Zeichnung nachfolgend näher erläutert. Es zeigen:
- Fig. 1: einen Längsschnitt durch eine Flügelzellenpumpe nach der Linie I-I in Fig. 2;
- Fig. 2: eine vergrößerte Ansicht auf das Pumpenpaket bei weggelassenem Gehäuse nach der Linie II-II in Fig. 1;
- Fig. 3: eine vergrößerte Ansicht auf die Ventileinrichtung gleichfalls bei weggelassenem Gehäuse nach der Linie III-III in Fig. 1 und
- Fig. 4: einen Teil-Längsschnitt einer weiteren Ausführungsform.

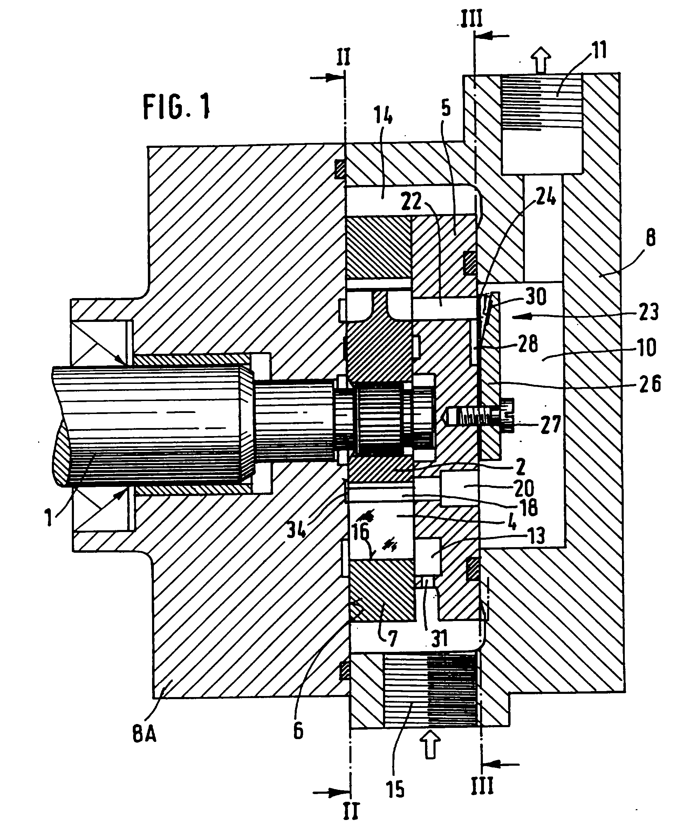

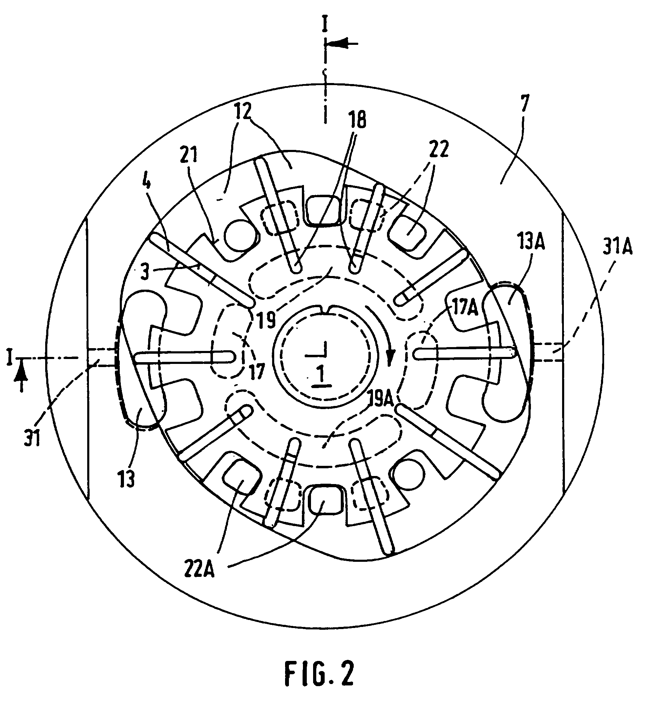

Die Hauptbauteile der Flügelzellenpumpe entsprechen der allgemein bekannten Bauart, so daß sich die Beschreibung auf die zum Verständnis wesentlichen Teile beschränkt. Die doppelhubige Pumpe trägt nach Fig. 1 und 2 einen auf einer Antriebswelle 1 drehfesten Rotor 2, in dessen Schlitzen 3 radial gleitende Flügel 4 geführt sind. Der Rotor 2 dreht sich gemeinsam mit den Flügeln zwischen einer vorderen und einer hinteren Stirnplatte 5 bzw. 6. Die Flügel 4 gleiten an ihrem Außendurchmesser in einen Kurvenring 7. Die vordere Stirnplatte 5 setzt man zum Zwecke des Spielausgleichs lose zwischen ein Gehäuseteil 8 und das aus Rotor 2, Flügeln 4 und Kurvenring 7 bestehende Pumpenpaket ein. Die hintere Stirnplatte 6 ist mit einem Gehäuseteil 8A einstückig ausgeführt. Hinter der Stirnplatte 5 liegt ein Druckraum 10, welcher mit einer zum Verbraucher führenden Auslaßbohrung 11 in Verbindung steht. Die Flügel 4 schließen Arbeitskammern 12 zwischen sich ein, die über Saugöffnungen 13 und 13A und einen ringförmigen Saugraum 14 mit einem Sauganschluß 15 verbunden sind. Zur besseren Abdichtung der Flügel 4 in einer Hubkurve 16 des Kurvenrings 7 leitet man den Arbeitsdruck über Bohrungen 20, 20A, teilringförmige Kanäle 17, 17A bzw. 19, 19A und über eine Ringnut 34 in innere Flügelräume 18 (Fig. 2)

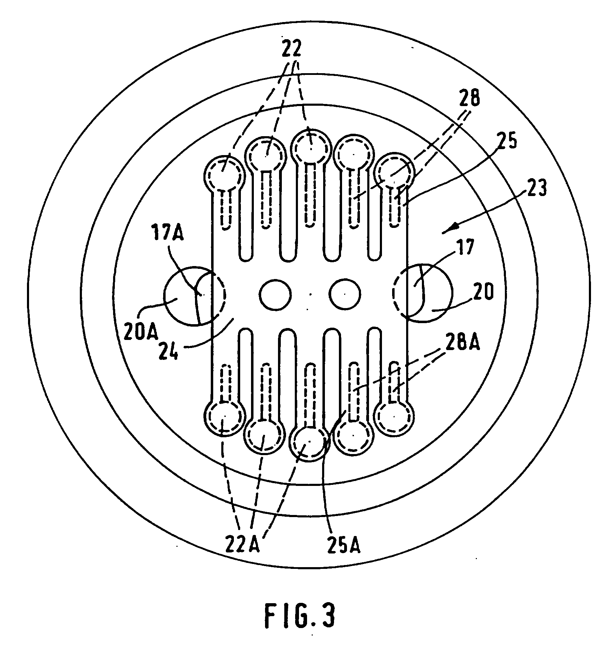

Nach der Erfindung hat der Rotor 2 zwischen den Flügeln 4 Steuerschlitze 21. Außerdem sind in die Stirnplatte 5 im Bereich der Druckzone mehrere auf einem Kreisabschnitt hintereinanderliegende Auslaßöffnungen 22 bzw. 22A vorgesehen. Die Steuerschlitze 21 und die Auslaßöffnungen sind so bemessen, daß kein Rückstrom von Drucköl in eine nachfolgende Arbeitskammer 12 mit geringerer Druckhöhe stattfinden kann. Dadurch läßt sich Kavitation vermeiden. Die Auslaßöffnungen 22 und 22A werden durch eine Ventileinrichtung 23 (Fig. 3) verschlossen, die aus einer kammartigen Zungenfeder 24 mit spiegelbildlich liegenden, beweglichen Zungen 25 bzw. 25A und einem Stützkörper 26 (Fig. 1) besteht. Die aus einem dünnen Stahlblech gefertigte Zungenfeder 24 und der Stützkörper 26 lassen sich beide mit Schrauben 27 an der Stirnplatte 5 befestigen. Aus den Fig. 1 und 3 ist ersichtlich, daß die Auslaßöffnungen 22 und 22A zur Vergrößerung ihres Austrittquerschnitts mit radialen Nuten 28 bzw. 28A versehen sind. Die Zungen 22 bzw. 22A lassen sich dadurch beim Öffnen über eine größere Fläche aufdrücken. Der im Teilschnitt sichtbare Stützkörper 26 hat in der Höhe der Auslaßöffnungen 22 bzw. 22A zur Dämpfung der Öffnungsbewegung Öltaschen 30. Außerdem gehört noch zur Erfindung, daß zwischen dem ringförmigen Saugraum 14 und den Saugöffnungen 13 bzw. 13A Drosselbohrungen 31 und 31A vorgesehen sind, die den Ansaugstrom über der Pumpendrehzahl begrenzen.

Der Rotor 2 dreht in Richtung des Pfeiles in Fig. 2. Das von den Saugöffnungen 13 und 13A in die Arbeitskammern 12 einströmende Öl wird entsprechend der Hubkurve 16 des Kurvenrings 7 durch die Flügel verdichtet und gelangt, je nach Füllungsgsrad der Arbeitskammern 12, über die im vorderen und im hinteren Bereich der Druckzone liegenden Auslaßöffnungen 22 und 22A und die Ventileinrichtung 23 in den Druckraum 10. Dabei heben die Zungen 25 bzw. 25A durch den Förderdruck von den Auslaßöffnungen 22 und 22A ab und legen sich kurzzeitig nacheinander am Stützkörper 26 an. Das Öl strömt schließlich vom Druckraum 10 über die Auslaßbohrung 11 zum Verbraucher ab.

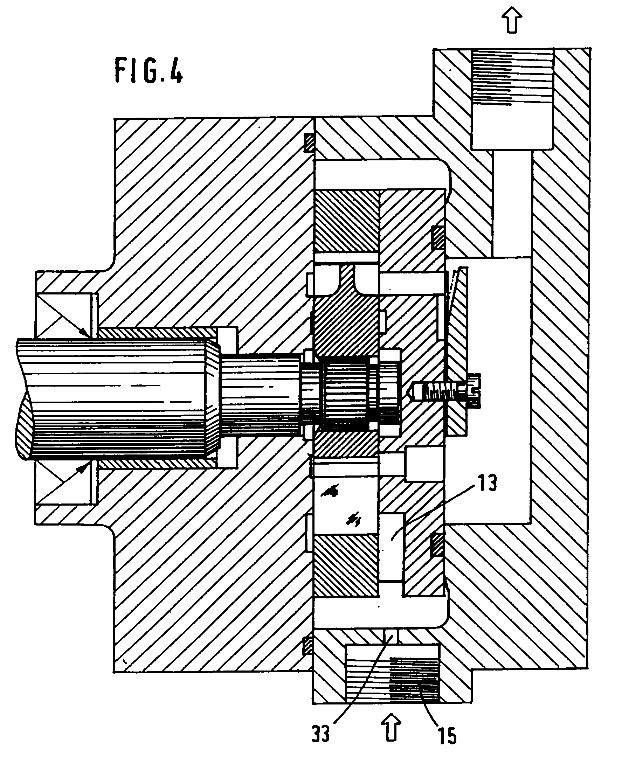

Die Ausführungsform nach Fig. 4 unterscheidet sich von Fig. 1 dadurch, daß der mit den Saugöffnungen 13 und 13A verbundene ringförmige Saugraum 32 über eine einzige Drosselbohrung 33 mit dem Sauganschluß 15 verbunden ist. Die Drosselbohrung 33 begrenzt daher den Zustrom für beide Saugöffnungen 13 und 13A. Selbstverständlich ist es auch möglich, anstelle der beschriebenen Drosselbohrungen 31, 31A bzw. 33 ein elektromagnetisch betätigtes Proportionalventil in den Sauganschluß 15 einzusetzen, welches beispielsweise in Abhängigkeit von der Fahrgeschwindigkeit einen beliebigen Saugstrom einstellen kann (siehe DE-OS 41 10 734 A1).

### Bezugszeichen

- 1: Antriebswelle
- 2: Rotor
- 3: Schlitze
- 4: Flügel
- 5: Stirnplatte
- 6: Stirnplatte
- 7: Kurvenring
- 8, 8A: Gehäuseteil
- 9: -
- 10: Druckraum
- 11: Auslaßbohrung
- 12: Arbeitskammern
- 13, 13A: Saugöffnungen
- 14: Saugraum
- 15: Sauganschluß
- 16: Hubkurve
- 17, 17A: teilringförmige Kanäle
- 18: innere Flügelräume
- 19, 19A: teilringförmige Kanäle
- 20, 20A: Bohrungen
- 21: Steuerschlitze
- 22, 22A: Auslaßöffnungen
- 23: Ventileinrichtung
- 24: Zungenfeder
- 25, 25A: Zungen
- 26: Stützkörper
- 27: Schrauben
- 28, 28A: Nuten
- 29: -
- 30: Öltaschen
- 31, 31A: Drosselbohrungen
- 32: Saugraum
- 33: Drosselbohrung
- 34: Ringkanal

## Patentansprüche

1. Drehkolbenpumpe mit folgenden Merkmalen:
- in einem Gehäuse (8, 8A) sitzt ein Kurvenring (7);
- im Kurvenring (7) dreht sich ein auf einer Antriebswelle (1) befestigter Rotor (2), in welchem radial ) verschiebliche Arbeitsschieber geführt sind;
- zwischen den Arbeitsschiebern befindliche Arbeitskammern (12) sind axial durch Stirnplatten (5, 6) begrenzt;
- die Ölzu- und -abfuhr erfolgt über Saug- und Druckzonen;
- im Bereich der Druckzonen befinden sich mehrere Auslaßöffnungen (22, 22A), die durch eine zungenartige Ventileinrichtung (23) abgedeckt sind, so daß bei teilgefüllten Arbeitskammern ein Rückstrom bereits geförderten Öls verhindert wird;
- die Arbeitsschieber sind auf ihrer radial innenliegenden Stirnseite vom Auslaßdruck beaufschlagt;
- die Ölzufuhr in die Arbeitskammern ist durch Querschnittsverengungen (Drosselbohrungen 31 und 31A) begrenzt,
**gekennzeichnet** durch folgende Merkmale:
- die Drehkolbenpumpe ist als Flügelzellenpumpe ausgeführt und
- der Rotor (2) weist zwischen den Flügeln (4) Steuerschlitze (21) auf, die so bemessen sind, daß ein Rückströmen von gefördertem Öl aus einer Arbeitskammer (12) höheren Druckes in eine Arbeitskammer niedrigeren Druckes vermieden wird.

2. Drehkolbenpumpe nach Anspruch 1, in welcher der Öffnungsweg von beweglichen Zungen (25, 25A) der Ventileinrichtung (23) durch einen Stützkörper (26) begrenzt ist, dadurch **gekennzeichnet**, daß der Stützkörper (26) im Bereich der Zungen (25, 25A) Öltaschen (30) zur Dämpfung der Öffnungsbewegung aufweist.

## Claims

1. rotor-type pump with the following features:
- a cam ring (7) is located in a housing (8, 8A);
- a rotor (2) with radially sliding valves secured to an input shaft (1) turns in the cam ring (7);
- working chambers (12) between the radially sliding valves are axially bordered by face plates (5, 6);
- oil is supplied and removed via suction and discharge zones;
- the discharge zones contain several outlet openings (22, 22A) which are covered by a reed-type valve device (23) to prevent oil already supplied from flowing back when the working chambers are only partly filled;
- the internal radial faces of the working chambers are pressurized by outlet pressure;
- the oil supply to the operating chambers is limited by cross-sectional narrowings (restriction holes 31 and 31A),
characterized by the following features:
- the rotor-type pump is of vane pump design, and
- between the vanes (4), the rotor (2) has control slots (21) configured to prevent supplied oil flowing from an operating chamber (12) with higher pressure into an operating chamber with lower pressure.

2. Rotor-type pump in accordance with claim 1, in which the opening stroke of the moving reeds (25, 25A) in the valve device (23) is limited by a supporting body (26), characterized in that the supporting body (26) has oil pockets (30) in the reed (25, 25A) area for attenuating the opening movement.

## Revendications

1. Pompe à piston rotatif avec les caractéristiques suivantes :
- dans un carter (8, 8A) est disposée une came (7);
- dans la came (7) tourne un rotor (2) fixé à un arbre d'entraînement (1), ce rotor étant pourvu de tiroirs de travail coulissant radialement;
- les chambres de travail (12) situées entre les tiroirs de travail sont limitées axialement par des disques frontaux (5, 6);
- l'alimentation et l'évacuation de l'huile se produisent dans les zones d'aspiration et de compression;
- dans le secteur des zones de compression se trouvent plusieurs ouvertures d'échappement (22, 22A), qui sont recouvertes par un dispositif de soupapes à languettes agencé pour empêcher un courant de retour de l'huile déjà engagée dans les chambres de travail partiellement remplies;
- les tiroirs de travail sont ouverts sur leur face frontale intérieure radialement par la pression d'échappement;
- l'alimentation de l'huile dans les chambres de travail est limitée par les rétrécissements de la section transversale (alésages d'étranglement 31 et 31A);
**caractérisée en ce que**
- la pompe à piston rotatif est constituée par une pompe à ailettes et
- le rotor (2) présente entre les ailettes (4) des fentes d'étranglement (21), qui sont dimensionnées de manière à empêcher un courant de retour de l'huile amenée d'une chambre de travail (12) à une pression supérieure, vers une chambre de travail à une pression plus basse.

2. Pompe à piston rotatif selon la revendication 1, dans laquelle le chemin d'ouverture des languettes mobiles (25, 25A) du dispositif de soupapes (23) est limité par un corps d'appui (26), **caractérisée en ce que** le corps d'appui (26) présente dans la zone des languettes (25,. 25A) des poches d'huile (30) pour l'amortissement du mouvement d'ouverture.
